# EUROPÄISCHE PATENTSCHRIFT

(11) **EP 1 616 757 B1**
(45) Veröffentlichungstag und Bekanntmachung des Hinweises auf die Patenterteilung: **06.08.2008**
(21) Anmeldenummer: 05012410.6
(22) Anmeldetag: 09.06.2005
(51) Int. Cl.: B60R 11/02, H04R 1/02

(54) **Innenraumverkleidung**
Interior liner
Revêtement intérieur

(30) Priorität: 21.06.2004 DE 102004029865
(43) Veröffentlichungstag der Anmeldung: 18.01.2006
(73) Patentinhaber: Daimler AG, 70327 Stuttgart (DE)
(72) Erfinder: Schmitz, Stefan, 72072 Tübingen (DE)

(56) Entgegenhaltungen:
- WO-A-03/043372
- DE-A1- 2 920 836

## Beschreibung

Die Erfindung betrifft eine Innenraumverkleidung eines Kraftfahrzeugs mit einem Verkleidungsteil, dass eine Öffnung, vorzugsweise für einen Lautsprecher, aufweist.

Solche Innenraumverkleidungen sind allgemein bekannt.

So zeigt die DE 34 24 434 einen Halter für einen Lautsprecher in einer Einbauöffnung einer Karosseriewand. Der Halter ermöglicht einerseits einen vereinfachten Einbau des Lautsprechers in die Karosseriewand und andererseits eine akustische Schallabdichtung zwischen der Abstrahlseite und der Einbauseite des Lautsprechers. Der Halter wird über Rastnasen an der Karosseriewand gehalten.

Aus der DE 29 20 836 A1 ist eine Halterung bekannt, die eine Lautsprecherblende mittels einer bajonettverschlussartigen Montage sichert.

Der Erfindung liegt die Aufgabe zu Grunde eine Innenraumverkleidung eines Kraftfahrzeugs mit einem Verkleidungsteil, dass eine Öffnung ausweist, zu schaffen, die auf konstruktiv einfache, kostengünstige und optisch ansprechende Weise eine variable, schnelle und einfache Montage von Elementen an der Öffnung des Verkleidungsteils ermöglicht.

Erfindungsgemäß wird diese Aufgabe durch eine Innenraumverkleidung mit den Merkmalen des Anspruchs 1 gelöst.

Eine Innenraumverkleidung eines Kraftfahrzeugs weist ein Verkleidungsteil auf. In dem Verkleidungsteil ist eine Öffnung, vorzugsweise für einen Lautsprecher, und mindestens eine Aussparung, insbesondere Positionierhilfe, angeordnet.
Die Öffnung ist durch eine Blende, die einen in die Aussparung eingreifenden Stift aufweist, verdeckt. Die Blende ist in mindestens zwei Montagepositionen befestigbar, wobei die Montagepositionen um einen vorbestimmten Winkel zueinander gedreht sind und in einer ersten Montageposition die Blende in einem Abstand zum Verkleidungsteil angeordnet ist und in einer zweiten Montageposition an dem Verkleidungsteil unmittelbar anliegt. Hierbei greift der Stift in Abhängigkeit von der Montageposition in unterschiedlich angeordnete Aussparungen ein.
Dies hat den Vorteil, dass bei einer Montage der Blende schnell und einfach eine der beiden Montagepositionen erreicht werden kann. Des Weiteren können mit derselben Blende verschiedene Montagepositionen realisiert werden.

Die Innenraumverkleidung ist typischerweise eine Türinnenverkleidung eines Kraftfahrzeugs. Die Blende kann als Gitter zur Abdeckung eines Lautsprechers ausgebildet sein.

In einer Ausführung ist vorgesehen, dass die Blende einen Rasthaken aufweist, der das Verkleidungsteil hintergreift und so die Blende fixiert. Hierdurch wird die Blende sicher an dem Verkleidungsteil gehaltert.

Von Vorteil ist auch, wenn in der ersten Montageposition zwischen dem Verkleidungsteil und der Blende ein Ziereinlegeteil, insbesondere ein Zierring, angeordnet ist. Durch den Zierring, der den Abstand zwischen Blende und Verkleidungsteil überbrückt, wird ein optisch ansprechendes Erscheinungsbild erreicht und so an ein Interieurdesign angepasst. Entsprechend verschiedener Ausstattungsvarianten des Kraftfahrzeugs können verschiedene Zierringe verbaut werden.

Gemäß einer bevorzugten Weiterbildung, ist das Ziereinlegeteil mit der Blende verrastbar. Hierdurch wird eine vereinfachte Montage, insbesondere eine Vormontage von dem Ziereinlegeteil mit der Blende und eine mechanisch stabile Halterung ermöglicht.

Gemäß einer bevorzugten Ausführungsform der erfindungsgemäßen Lösung ist vorgesehen, dass das Verkleidungsteil eine erste Kerbe aufweist, in die eine am Ziereinlegeteil angeordnete Nase so eingreift, dass die Blende bei aufgerastetem Ziereinlegeteil nur in der ersten Montageposition befestigbar ist. Dadurch wird die Montage wesentlich vereinfacht, da durch den Ausschluss anderer Montagepositionen schnell und einfach die passende Montageposition auffindbar ist.

Vorteilhaft ist ferner, dass das Verkleidungsteil eine zweite Kerbe aufweist, in die eine an der Blende angeordnete Nase so eingreift, dass die Blende bei nicht aufgerastetem Ziereinlegeteil nur in der zweiten Montageposition befestigbar ist. Hierdurch wird ebenfalls das Auffinden der richtigen Montageposition erleichtert.

Es ist auch vorgesehen, dass die Blende einen Abstandsnocken aufweist, der so angeordnet ist, dass in der ersten Montageposition der Nocken auf dem Verkleidungsteil aufsitzt und in der zweiten Montageposition in eine Ausnehmung in den Verkleidungsteil eingreift. Hierdurch wird ebenfalls die Montage vereinfacht und automatisch ein vorbestimmter Abstand zwischen dem Verkleidungsteil und der Blende eingestellt.

In einer Weiterbildung sind die Nase und der Abstandsnocken als ein gemeinsames Teil ausgebildet. Hierdurch wird auf konstruktiv einfache Weise eine vereinfachte und kostengünstigere Herstellung erreicht.

Es ist auch vorgesehen, dass das Verkleidungsteil eine an der Öffnung kreisförmig umlaufende Fläche aufweist, die der Rasthacken in der ersten Montageposition hintergreift. Des Weiteren ist vorgesehen, dass die Fläche einen erhabenen Steg aufweist, den der Rasthacken in der zweiten Montageposition hintergreift. Hierdurch wird es ermöglicht, dass die Blende in beiden Montagepositionen, trotz des unterschiedlichen Abstands zum Verkleidungsteil, durch den selben Rasthacken sicher gehaltert wird.

Weitere Vorteile und Einzelheiten der Erfindung sind in den Patentansprüchen und in der Beschreibung erläutert und in den Figuren dargestellt.

### Dabei zeigen:

- Fig. 1: einen Teilbereich eines Verkleidungsteils, einen Zierring und eine Blende in einer ersten Montageposition und
- Fig. 2: den Teilbereich des Verkleidungsteils und die Blende in einer zweiten Montageposition.

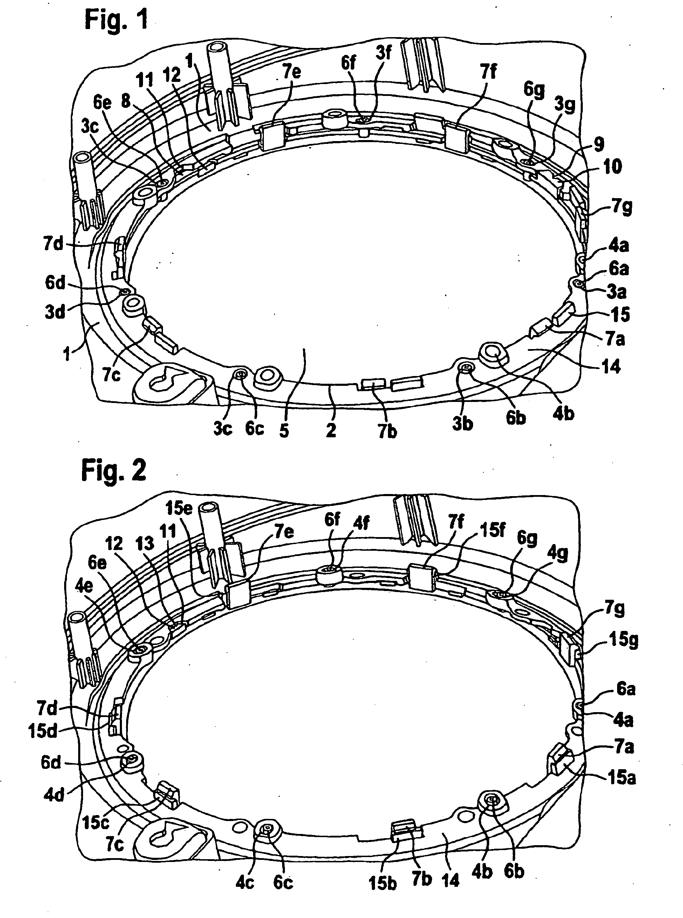

Figur 1 zeigt einen Teilbereich eines Verkleidungsteils 1 mit einer Öffnung 2, die durch eine Blende 5 verdeckt ist. Die Darstellung zeigt die dem Innenraum des Kraftfahrzeugs abgewandte Seite des Verkleidungsteils (1). Ein in der Figur nicht dargestellter Lautsprecher kann an das Verkleidungsteil (1) mit Abstrahlung zum Innenraum des Kraftfahrzeugs hin montiert werden. Das Verkleidungsteil 1 weist erste Aussparungen 3a bis g auf, in die an der Blende 5 angeordnete Stifte 6a bis g eingreifen. Die ersten Aussparungen 3a bis g und die Stifte 6a bis g wirken so zusammen, dass eine Positionierung der Blende 5 bei der Montage vereinfacht wird. In der in Figur 1 dargestellten ersten Montageposition ist zwischen der Blende 5 und dem Verkleidungsteil 1 ein Zierring 8 angeordnet. Der Zierring 8 kann beispielsweise ein lackiertes oder verchromtes Kunststoff-, Metall- oder Holzelement sein, das je nach Ausstattungsvariante des Kraftfahrzeugs unterschiedlich ausgestaltet ist. Der Zierring dient dazu, die Wertanmutung des Kraftfahrzeuginnenraums zu erhöhen.

Das Verkleidungsteil 1 weist eine an der Öffnung 2 kreisförmig umlaufende Fläche 14 auf, die von an der Blende 5 angeordneten Rasthacken 7a bis g hintergriffen wird. Durch die Rasthacken 7a bis g wird eine einfache Montage der Blende durch Einclipsen ermöglicht. Im montierten Zustand erfolgt durch die Rasthacken 7a bis g eine sichere und klapperfreie Halterung der Blende.

Die Montage der Blende 5 mit dem Zierring 8 wird durch eine an der Blende 5 angeordnete Nase 12 und eine mit dieser korrespondierenden Ausnehmung 16 an dem Zierring 8 vereinfacht, indem andere Relativpositionen der Blende 5 zu dem Zierring 8 ausgeschlossen werden.

Figur 2 zeigt das Verkleidungsteil 1 und die Blende 5 in der zweiten Montageposition. In dieser Montageposition liegt die Blende 5 unmittelbar an dem Verkleidungsteil 1 an und ist gegenüber der ersten Montageposition um einen vorbestimmten Winkel gedreht. Die umlaufende Fläche 14 weist erhabene Stege 15 a bis g auf, die von den an der Blende 5 angeordneten Rasthacken 7a bis g hintergriffen werden. Durch die erhabenen Stege 15 a bis g wird ermöglicht, dass trotz des nun geringeren Abstandes der Blende 5 zu dem Verkleidungsteil 1 dieselben Rasthacken 7a bis g wie in der ersten Montageposition zur Halterung der Blende 5 geeignet sind.
So werden mit demselben Bauteil verschieden Ausstattungsvarianten des Innenraums ermöglicht. Durch dieselben Rasthaken wie bei eingelegtem Zierring wird eine sichere und klapperfreie Halterung erreicht.

Die Stifte 6a bis g dienen als Positionierungshilfe und greifen in der zweiten Montageposition in die Aussparungen 4a bis g, deren Abmessungen bzw. Form auf die Stifte 6a bis g abgestimmt ist, ein. Die an der Blende angeordnete Nase 12 greift in eine zweite Kerbe 11 ein. Hierdurch wird sichergestellt, dass sobald kein Zierring 8 zwischen der Blende 5 und dem Verkleidungsteil 1 angeordnet ist, die Blende 5 nur in der zweiten Montageposition montiert werden kann.

Neben den in Figur 1 und Figur 2 dargestellten zwei Montagepositionen sind auch weitere Montagepositionen denkbar. Hierfür sind weitere Aussparungen, Nasen und Stege mit unterschiedlicher Höhe erforderlich, die jeweils in unterschiedlichen Drehwinkelpositionen angeordnet sind.

## Patentansprüche

1. Innenraumverkleidung eines Kraftfahrzeugs mit einem Verkleidungsteil (1), das eine Öffnung (2), vorzugsweise für einen Lautsprecher, und mind. eine Aussparung (3, 4), insbesondere Positionierungshilfe, aufweist, wobei die Öffnung (2) durch eine Blende (5), die einen in die Aussparung (3) eingreifenden Stift (6) aufweist, verdeckt ist,
**dadurch gekennzeichnet,**
**dass** die Blende (5) in mindestens zwei Montagepositionen befestigbar ist, wobei die Montagepositionen um einen vorbestimmten Winkel zueinander gedreht sind und in einer ersten Montageposition die Blende (5) in einem Abstand zum Verkleidungsteil (1) angeordnet ist und in einer zweiten Montageposition an dem Verkleidungsteil (1) unmittelbar anliegt, wobei der Stift (6) in Abhängigkeit von der Montageposition in unterschiedlich angeordnete Aussparungen (3, 4) eingreift.

2. Innenraumverkleidung eines Kraftfahrzeugs nach Anspruch 1
**dadurch gekennzeichnet,**
**dass** Blende (5) einen Rasthaken (7) aufweist, der das Verkleidungsteil (1) hintergreift und so die Blende (5) fixiert.

3. Innenraumverkleidung eines Kraftfahrzeugs nach Anspruch 1 oder 2
**dadurch gekennzeichnet,**
**dass** in der ersten Montageposition zwischen dem Verkleidungsteil (1) und der Blende (5) ein Ziereinlegeteil (8), insbesondere ein Zierring (8), angeordnet ist.

4. Innenraumverkleidung eines Kraftfahrzeugs nach einem der vorhergehenden Ansprüche
**dadurch gekennzeichnet,**
**dass** das Ziereinlegeteil (8) mit dem Blende (5) verrastbar ist.

5. Innenraumverkleidung eines Kraftfahrzeugs nach Anspruch 4
**dadurch gekennzeichnet,**
**dass** das Verkleidungsteil (1) eine erste Kerbe (9) aufweist, in die eine am Ziereinlegeteil (8) angeordnete Nase (10) so eingreift, dass die Blende (5) bei aufgerastetem Ziereinlegeteil (8) nur in der ersten Montageposition befestigbar ist.

6. Innenraumverkleidung eines Kraftfahrzeugs nach einem der vorhergehenden Ansprüche
**dadurch gekennzeichnet,**
**dass** das Verkleidungsteil (1) eine zweite Kerbe (11) aufweist, in die eine an der Blende (5) angeordnete Nase (12) so eingreift, dass die Blende (5) bei nicht aufgerastetem Ziereinlegeteil (8) nur in der zweiten Montageposition befestigbar ist.

7. Innenraumverkleidung eines Kraftfahrzeugs nach einem der vorhergehenden Ansprüche
**dadurch gekennzeichnet,**
**dass** die Blende (5) einen Abstandsnocken (13) aufweist, der so angeordnet ist, dass in der ersten Montageposition der Nocken (13) auf dem Verkleidungsteil (1) aufsitzt und in der zweiten Montageposition in eine Ausnehmung (11) in dem Verkleidungsteil eingreift.

8. Innenraumverkleidung eines Kraftfahrzeugs nach einem der vorhergehenden Ansprüche
**dadurch gekennzeichnet,**
**dass** die Nase (12) und der Abstandsnocken (13) als ein gemeinsames Teil (12, 13) ausgebildet sind.

9. Innenraumverkleidung eines Kraftfahrzeugs nach einem der vorhergehenden Ansprüche
**dadurch gekennzeichnet,**
**dass** das Verkleidungsteil (1) eine an der Öffnung (2) kreisförmig umlaufende Fläche (14) aufweist, die der Rasthaken (7) in der ersten Montageposition hintergreift.

10. Innenraumverkleidung eines Kraftfahrzeugs nach einem der vorhergehenden Ansprüche
**dadurch gekennzeichnet,**
**dass** die Fläche (14) einen erhabenen Steg (15) aufweist, den der Rasthaken (7) in der zweiten Montageposition hintergreift.

## Claims

1. Interior liner of a motor vehicle comprising a liner part (1), which has an opening (2), preferably for a loudspeaker, and at least one recess (3, 4), in particular a positioning aid, wherein the opening (2) is covered by a panel (5), which has a pin (6) engaging in the recess (3), **characterised in that** the panel (5) can be fastened in at least two assembly positions, wherein the assembly positions are rotated with respect to one another about a predetermined angle and the panel (5) is arranged in a first assembly position at a spacing from the liner part (1) and rests directly on the liner part (1) in a second assembly position, the pin (6) engaging in differently arranged recesses (3, 4) as a function of the assembly position.

2. Interior liner of a motor vehicle according to claim 1, **characterised in that** the panel (5) has a latching hook (7), which engages behind the liner part (1) and thus fixes the panel (5).

3. Interior liner of a motor vehicle according to claim 1 or 2, **characterised in that** a decorative insert part (8), in particular a decorative ring (8) is arranged in the first assembly position between the liner part (1) and the panel (5).

4. Interior liner of a motor vehicle according to any one of the preceding claims, **characterised in that** the decorative insert part (8) can be latched to the panel (5).

5. Interior liner of a motor vehicle according to claim 4, **characterised in that** the liner part (1) has a first notch (9), into which a nose (10) arranged on the decorative insert part (8) engages in such a way that when the decorative insert part (8) is latched on, the panel (5) can only be fixed in the first assembly position.

6. Interior liner of a motor vehicle according to any one of the preceding claims, **characterised in that** the liner part (1) has a second notch (11), into which a nose (12) arranged on the panel (5) engages in such a way that when the decorative insert part (8) is not latched on, the panel (5) can only be fastened in the second assembly position.

7. Interior liner of a motor vehicle according to any one of the preceding claims, **characterised in that** the panel (5) has a spacer cam (13), which is arranged in such a way that, in the first assembly position, the cam (13) sits on the liner part (1) and, in the second assembly position, engages in a recess (11) in the liner part.

8. Interior liner of a motor vehicle according to any one of the preceding claims, **characterised in that** the nose (12) and the spacer cam (13) are configured as a joint part (12, 13).

9. Interior liner of a motor vehicle according to any one of the preceding claims, **characterised in that** the liner part (1) has a circular peripheral face (14) on the opening (2), behind which face, the latching hook (7) engages in the first assembly position.

10. Interior liner of a motor vehicle according to any one of the preceding claims, **characterised in that** the face (14) has a raised web (15), behind which the latching hook (7) engages in the second assembly position.

## Revendications

1. Revêtement intérieur d'un véhicule, avec une partie de revêtement (1), présentant une ouverture (2), de préférence pour un haut-parleur et au moins un évidement (3, 4), en particulier des aides au positionnement, l'ouverture (2) étant couverte par un masque (5) présentant un téton (6) s'engageant dans l'évidement (3), **caractérisé en ce que** le masque (5) est susceptible d'être fixé en au moins deux positions de montage, les positions de montage étant tournées l'une par rapport à l'autre d'un angle prédéterminé et, en une première position de montage, le masque (5) est disposé à distance par rapport à la partie de revêtement (1) et, en une deuxième position de montage, est en appui direct sur la partie de revêtement (1), le téton (6), en fonction de la position de montage, s'engageant dans des évidements (3, 4) disposés différemment.

2. Revêtement intérieur d'un véhicule automobile selon la revendication 1, **caractérisé en ce que** le masque (5) présente un crochet d'encliquetage (7), saisissant par l'arrière la partie de revêtement (1) et, ainsi, fixant le masque (5).

3. Revêtement intérieur d'un véhicule automobile selon la revendication 1 ou 2, **caractérisé en ce que**, à la première position de montage, une partie décorative à insérer (8), en particulier une bague de décoration (8), est disposée entre la partie de revêtement (1) et le masque (5).

4. Revêtement intérieur d'un véhicule automobile selon l'une des revendications précédentes, **caractérisé en ce que** la partie décorative à insérer (8) est encliquetable avec le masque (5).

5. Revêtement intérieur d'un véhicule automobile selon la revendication 4, **caractérisé en ce que** la partie de revêtement (1) présente une première entaille (9), dans laquelle s'engage un ergot (10), disposé sur la partie décorative à insérer (8), de manière que le masque (5) puisse être fixé uniquement à la première position de montage, lorsque la partie décorative à insérer (8) est appliquée par encliquetage.

6. Revêtement intérieur d'un véhicule automobile selon l'une des revendications précédentes, **caractérisé en ce que** la partie de revêtement (1) présente une deuxième entaille (11), dans laquelle s'engage un ergot (12), disposé sur le masque (1), de manière que le masque (5) puisse être fixé uniquement à la deuxième position de montage, lorsque la partie décorative à insérer (8) n'est pas appliquée par encliquetage.

7. Revêtement intérieur d'un véhicule automobile selon l'une des revendications précédentes, **caractérisé en ce que** le masque (5) présente une came d'espacement (13), disposée de manière que, à la première position de montage, la came (13) repose sur la partie de revêtement (1) et, à la deuxième position de montage, elle s'engage dans un évidement (11) ménagé dans la partie de revêtement.

8. Revêtement intérieur d'un véhicule automobile selon l'une des revendications précédentes, **caractérisé en ce que** l'ergot (12) et la came d'espacement (13) sont réalisés sous forme de pièces (12, 13) communes.

9. Revêtement intérieur d'un véhicule automobile selon l'une des revendications précédentes, **caractérisé en ce que** la partie de revêtement (1) présente sur l'ouverture (2) une surface (14) de pourtour, circulaire, qui saisit par l'arrière le crochet d'encliquetage (7), lorsqu'on se trouve à la première position de montage.

10. Revêtement intérieur d'un véhicule automobile selon l'une des revendications précédentes, **caractérisé en ce que** la surface (14) présente une nervure (15) en relief saisissant par l'arrière le crochet d'encliquetage (7), lorsqu'on se trouve à la deuxième position de montage.
